# EUROPEAN PATENT SPECIFICATION

(11) **EP 2 022 710 B1**
(45) Date of publication and mention of the grant of the patent: **01.04.2015**
(21) Application number: 08252511.4
(22) Date of filing: 23.07.2008
(51) Int. Cl.: B62J 35/00, F16L 3/04

(54) **Cover, hose fixing structure and straddle-type vehicle**
Abdeckung, Schlauchbefestigungsstruktur und im Grätschsitz zu führendes Fahrzeug
Couvercle, structure de fixation de tuyau et véhicule de type à enfourcher

(30) Priority: 26.07.2007 JP 2007195111; 31.07.2007 JP 2007198342; 18.06.2008 JP 2008158911
(43) Date of publication of application: 11.02.2009
(73) Proprietor: Yamaha Hatsudoki Kabushiki Kaisha, Iwata-shi, Shizuoka 438-8501 (JP)
(72) Inventor: Konno, Toshihiko, Iwata-shi Shizuoka-ken 438-8501 (JP)
(74) Representative: Moreland, David

(56) References cited:
- CH-A- 318 349
- DE-A1- 19 532 664
- DE-A1-102005 014 046
- FR-A1- 2 732 302
- GB-A- 2 030 941
- JP-A- 2003 054 468
- JP-A- 2007 131 147
- US-A- 4 369 947

## Description

### FIELD OF THE INVENTION

The present invention relates to a cover, a hose fixing structure and a straddle-type vehicle.

### BACKGROUND TO THE INVENTION

JP-A-05-330468 discloses a cover structured such that a tray formed from a flexible member is provided on a filling portion of a fuel tank, an upright and inwardly bent side wall is formed above the tray, and when abutting against a bottom plate of a seat upon closure of the seat, the side wall is pushed by the bottom plate of the seat to be bent inward. In this case, the side wall of the tray formed from a flexible member is held down by the bottom plate of the seat. The bottom plate of the seat contacts with an outer side of the side wall and does not abut against an inner side polluted by a fuel. Also, even when a material of the flexible member is advanced in degradation and the side wall of the tray is deformed, the side wall is not deformed outward but deformed inward, so that the bottom plate of the seat contacts with the outer side of the side wall but does not abut against the inner side polluted by a fuel.

Also, JP-A-2003-054468 discloses a construction in which a cover covers the whole of an upper portion of a fuel tank to provide a concave tray, a recess is formed between a helmet box of the cover and the fuel tank, and a drain hose is connected to a bottom of the recess. In this case, since the cover covers the whole of the upper portion of the fuel tank to provide the concave tray, it is possible to ensure a large volume in the tray and to surely prevent gasoline from overflowing from the tray without enlarging a diameter of a drain pipe. Also, since the whole of the upper portion of the fuel tank is covered by the cover, a periphery of the fuel tank is not exposed outside in a state, in which a seat is opened, so that the periphery of the fuel tank is improved in outward appearance.

The cover described above is a member which receives fuel overflowing from a feed oil port of a fuel tank at the time of fueling and distributes the fuel appropriately through a drain hose. Therefore, it is desirable to provide a sufficient volume to receive a fuel overflowing from the feed oil port of the fuel tank. With JP-A-05-330468, the upright and inwardly bent side wall is formed above the tray, and when abutting against the bottom plate of the seat upon closure of the seat, the side wall is pushed by the bottom plate of the seat to be bent inward, and it is directed to prevent the bottom plate of the seat from being polluted by fuel. Since the side wall is not pushed by the seat bottom surface at the time of fueling, however, it is not bent inward but configured to be upright upward. On the other hand, fuel overflowing from the feed oil port flows toward the side wall and strikes against the side wall to become displaced over the side wall. Accordingly, there is a possibility that fuel leaks outside the cover over the side wall.

Also, with JP-A-2003-054468, a volume is ensured by having the cover covering the whole of the upper portion of the fuel tank to provide the concave tray and forming the recess between the helmet box of the cover and the fuel tank. However, such construction is materialized in a construction, in which a helmet box is arranged forwardly of a fuel tank, and so such construction cannot be adopted in some cases.

FR 2732302 discloses a cover and straddle-type vehicle according to the preambles of claims 1 and 11.

### SUMMARY OF THE INVENTION

Aspects of the present invention are described by the independent claims. Preferred but non-essential features of the claims are described by the dependent claims.

Described herein is a cover according to claim 1.

The roof may be inclined. The roof may define a pent roof.

The port may alternatively be defined as a tap.

A side end of the roof may be contiguous to the side wall provided upright around the reservoir.

The side wall may extend around the port from a periphery of the reservoir.

A bottom of the reservoir is inclined to become deeper towards the side wall from the port.

The cover further comprises a drain hole formed in a deepest region of the reservoir. The roof may extend above a deepest region of the reservoir.

A straddle-type vehicle comprising a cover defined above and a hose fixing structure may be provided to fix a hose connected to the drain hole to a back surface of a plastic molded part that has one side with a cosmetic surface, the hose fitting structure comprising support sections provided on the back surface for supporting sides of the hose, such as opposing sides of the hose, the support sections extending in a die cutting direction of the plastic molded part, and a stopper member attached to at least one of the support sections and adapted to hold the hose between the support sections.

A gap may be formed that allows the hose to be inserted between at least one support section and the stopper member.

A boss section may be formed on at least one support section. The stopper member may be screwed to the boss section.

An outer region of the stopper member may curve in a direction away from a back surface thereof. A gap may be formed that allows the hose to be inserted between at least one support section and the stopper member.

The stopper member may comprise a washer. The stopper member may comprise a tab or the like.

A straddle-type vehicle comprising a cover defined above and a hose fixing structure according to an aspect of the present invention may be provided for fixings a hose connected to the drain hole defined above to a back surface of a vehicle outer cover that is plastic moulded. The outer cover may include support sections that support the hose and extend in a die cutting direction of the outer cover. A stopper member that holds the hose between the support sections may be attached to at least one of the support sections.

The outer cover may include a guide for guiding the hose so that a discharge hole of the hose faces away from an associated vehicle and toward a road surface.

Also described herein is a straddle-type vehicle comprising a cover defined above.

Described herein is a straddle-type vehicle according to claim 11.

Described herein is a straddle-type vehicle comprising:
a tank having a port through which a liquid is poured; and
a cover according to claim 1.

The side wall provided upright around the reservoir may extend laterally of the port from a periphery of the reservoir.

A cover according to an aspect of the invention is arranged around a tap, through which a liquid is poured, on an upper surface of a tank, is in the form of a tray to receive a liquid overflowing from the tap, and is formed with a reservoir, in which a liquid overflowing from the tap stays. A side wall is provided upright around the reservoir and a pent roof is extended above the reservoir from the side wall.

A bottom of the reservoir may be inclined to become deep as it goes toward the side wall from the tap. A drain hole is formed in a deepest region of the reservoir and the pent roof may be extended above the drain hole.

Described herein is a hose fixing structure that comprises support sections, provided on a back surface of a plastic molded part with a cosmetic surface on one side thereof, that support both sides of the hose arranged along the back surface. The support sections extend in a die cutting direction of the plastic molded part and a stopper member that holds the hose between the support sections at either side is attached to at least one of the support sections.

A gap may be formed that allows the hose to be inserted between the support sections at either side and the stopper member.

A boss section may be formed on the support sections, and the stopper member may be screwed to the boss section. In this case, the stopper member may be a washer. Further, in this case, an outer circumference of the washer may curve in a direction away from the back surface, and a gap may be formed that allows the hose to be inserted between the support sections at either side and the washer.

In case of fixing the hose to, for example, a back surface of an outer cover of a vehicle, the outer cover preferably comprises support sections that support both sides of the hose arranged along the back surface. Preferably, the support sections extend in a die cutting direction of the plastic molded part and a stopper member that holds the hose between the support sections at either side is attached to at least one of the support sections. Also, the outer cover may include a guide for guiding the hose so that a discharge hole of the hose faces away from the vehicle and toward a road surface.

With the cover according to the invention, the side wall is provided upright around the reservoir, in which a liquid overflowing from the tap of the tank stays, and the pent roof is extended above the reservoir from the side wall. Accordingly, even when an overflowing liquid strikes against the side walls to become choppy or turbulent, the liquid is prevented by the pent roof from getting over the side wall. The reservoir is formed to be deeper than therearound, so that the reservoir is improved in volume.

Also, in the case where the bottom of the reservoir is inclined to become deep as it goes toward the side wall from the tap, a liquid overflowing from the tap goes along the slope of the bottom to flow to the reservoir. At this time, a liquid flowing to the reservoir flows downward once along the slope of the bottom. When flowing to the reservoir, a liquid flows downward once along the slope of the bottom, so that the liquid is hard to spill outside the cover over the pent roof disposed above the side wall. In this case, flow of a liquid flowing to the reservoir can be controlled and the liquid is hard to spill outside the cover over the pent roof.

Also, in the case where a drain hole is formed in a deepest region of the reservoir and the pent roof is extended above the deepest region of the reservoir, the liquid is hard to spill outside the cover since the pent roof is present above the deepest region of the reservoir, in which a liquid overflowing from the tap stays.

Also, a hose fixing structure can be molded by a simple, split die since the support sections extend in a die cutting direction of the plastic molded part. A stopper member that holds the hose between the support sections at either side is attached to at least one of the support sections. Therefore, any influences in outward appearance are not exerted on the cosmetic surface.

Also, in a configuration, in which the stopper member is formed with a gap, between the support sections at either side, that allows the hose to be inserted between the support sections, it is possible to mount and dismount the hose in a state, in which the stopper member is attached to the support section, so that the work in mounting of the hose and in maintenance is facilitated.

### BRIEF DESCRIPTION OF THE DRAWINGS

These and other aspects of the present invention will now be described, by way of example only, with reference to the accompanying drawings, in which:
Fig. 1 is a longitudinal, cross sectional view showing a state, in which a cover according to first embodiment of the invention is used;
Fig. 2 is a perspective view showing the cover according to first embodiment of the invention;
Fig. 3 is a plan view showing the cover according to first embodiment of the invention;
Fig. 4 is a bottom view showing the cover according to first embodiment of the invention;
Fig. 5 is a longitudinal, cross sectional view showing, in enlarged scale, a reservoir on the cover according to first embodiment of the invention;
Fig. 6 is a left side view showing a straddle-type vehicle according to first embodiment of the invention;
Fig. 7 is a cross-sectional view showing a hose fixing structure of second embodiment of the invention;
Fig. 8 is a cross-sectional view showing a modified form example of a hose fixing structure of second embodiment of the invention;
Fig. 9 shows a scooter motorcycle of second embodiment of the invention;
Fig. 10 is a side view showing a hose fixing structure of second embodiment of the invention;
Fig. 11 is a cross-sectional view showing a structure for fixing the hose; and
Fig. 12 is a cross-sectional view showing a structure for fixing the hose.

### DETAILED DESCRIPTION OF THE DRAWINGS

A cover according to first embodiment of the invention will be described below with reference to the drawings. In the drawings, members and regions acting in the same manner are denoted by the same reference numerals and similarly described. Also, the invention is not limited to the following embodiment. Also, "front", "rear", "left", "right", "upper", and "lower" referred below to in the specification of the present application with respect to a vehicle are described relative to a direction as viewed from a driver in a state, in which the driver rides in an ordinary riding posture. Also, respective drawings are depicted on the condition of being viewed in an upright direction of the reference character.

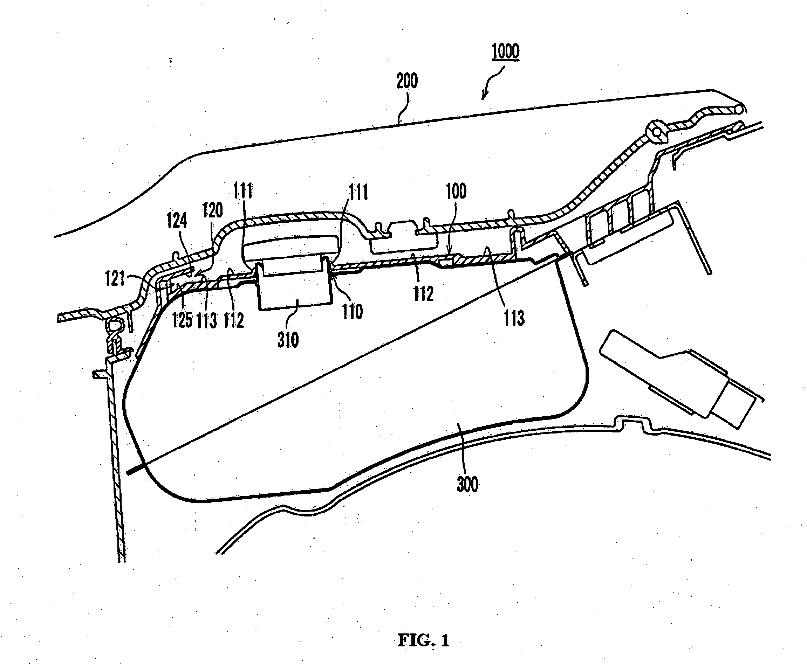

In the embodiment, a cover 100 is arranged as shown in Fig. 1 to cover an upper portion of a fuel tank 300 arranged below a seat 200 of a vehicle. The cover 100 is arranged around a feed oil port 310 (also defined as a tap, spout or the like) on an upper surface of the fuel tank 300 to assume a tray shape for receiving fuel overflowing from the feed oil port 310.

Specifically, the cover 100 is formed on an upper surface thereof with an opening 110, which exposes the feed oil port 310 of the fuel tank 300. An edge 111 of the opening 110 becomes upwardly protuberant. Also, a periphery 112 of the edge 111 of the opening 110 is a little lower than the edge 111 and a further periphery 113 thereof is lower by a step than the periphery 112 of the edge 111.

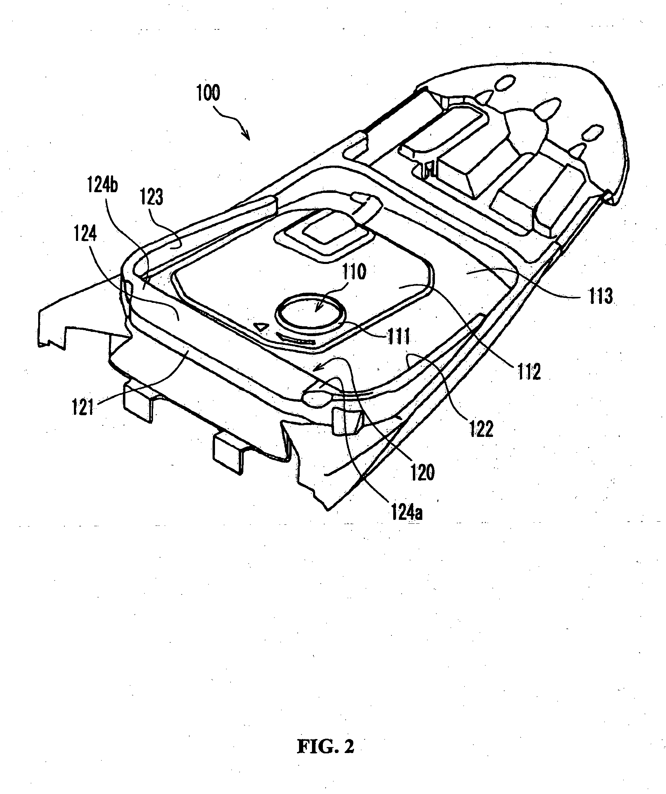

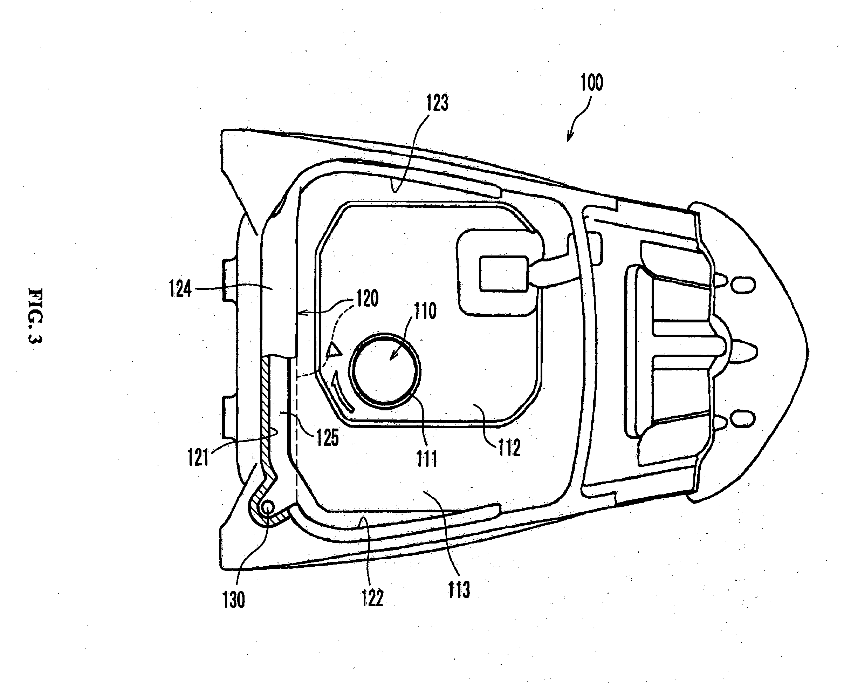

The cover 100 is formed with a reservoir 120, in which fuel overflowing from the feed oil port 310 is retained. In the embodiment, as shown in Figs. 2 and 3, the cover 100 is lower on a front side of the upper surface of the fuel tank 300 and the reservoir 120 is formed on a front side of the upper surface of the cover 100.

A front side wall 121 extending left and right and a pair of left and right side walls 122, 123 extending longitudinally are provided upright around the reservoir 120, and both left and right ends of the front side wall 121 and front ends of the both left and right side walls 122, 123 are contiguous to each other. A roof 124, in this embodiment a pent roof, is provided above the reservoir 120. The pent roof 124 extends rearward over a whole width region from an upper edge of the front side wall 121, and both left and right ends of the pent roof 124 are contiguous to upper edges at the front ends of the both left and right side walls 122, 123. Therefore, the pent roof 124 is extended above the reservoir 120 on the front side of the cover 100 from the front side wall 121 of the cover 100 and corners of the front side wall 121 and the left and right side walls 122, 123. With such construction, a storage space is formed in the reservoir 120which is configured to be opened only toward a rear surface (that is, toward the feed oil port 310).

Also, the higher in level the side walls 121, 122, 123 and the pent roof 124, the larger in volume the storage space, but the front side wall 121 cannot be made high in the embodiment since a bottom plate of a seat 200 is present in the vicinity of an upper portion of the front side wall 121 as shown in Fig. 1. Hereupon, paying attention to the fact that the bottom plate of the seat 200 is upwardly sloped rearward, the front side wall 121 is made intact in level and the pent roof 124 extending from the front side wall 121 is inclined so as to be upwardly sloped rearward along the bottom plate of the seat 200. Thereby, a rear edge (that is, an opened edge toward a rear surface of the storage space) of the pent roof 124 is ensured to be sufficiently high in level, and the storage space is ensured to be sufficiently large in volume.

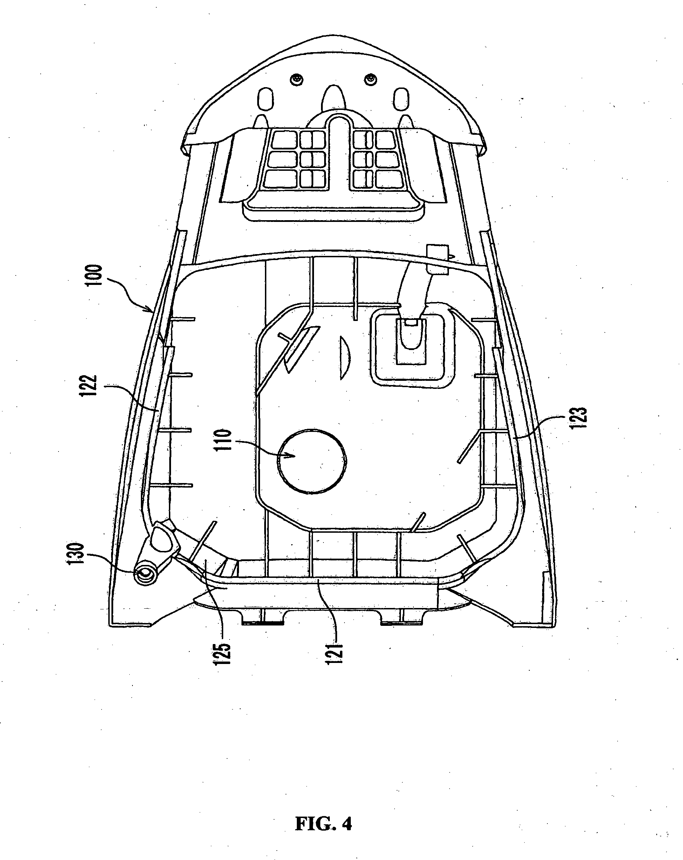

Further, in this embodiment, a bottom 125 of the reservoir 120 is inclined to become deeper towards the side wall 121 from the feed oil port 310 as shown in Fig. 1. In the embodiment, the periphery 112 around the edge 111 of the opening 110 is a little lower than the edge 111 and the periphery 113 thereof is lower by a step than the periphery 112 of the edge 111 as shown in Fig. 1. The bottom 125 of the reservoir 120 is inclined to become deeper towards the side wall 121 from the region 113. Also, Fig. 4 shows a bottom surface of the cover 100. In the embodiment, a drain hole 130 is formed in a deepest region of the reservoir 120 as shown in Figs. 3 and 4. The pent roof 124 is extended above the deepest region of the reservoir 120.

Also, in this embodiment, side ends 124a, 124b of the pent roof 124 extended above the reservoir 120 are connected to the side walls 122, 123 provided upright around the reservoir 120 as shown in Fig. 2. In this manner, since the side ends 124a, 124b of the pent roof 124 extended above the reservoir 120 are connected to the side walls 122, 123 provided upright around the reservoir 120, the pent roof 124 has a stable configuration in a state of being extended above the reservoir 120. Also, in the embodiment, the side walls 122, 123 provided upright around the reservoir 120 are extended around the opening 110, in which the tap or port 310 (see Fig. 1) is exposed, from a periphery of the reservoir 120. Thereby, fuel overflowing from the tap 310 is further surely led into the reservoir 120 along the side walls 122, 123.

In the embodiment shown, the cover 100 is made of rubber and formed integrally. A drain hose (not shown) is connected to the drain hole 130. The drain hose is preferably made integral with the cover 100 by means of, for example, bonding.

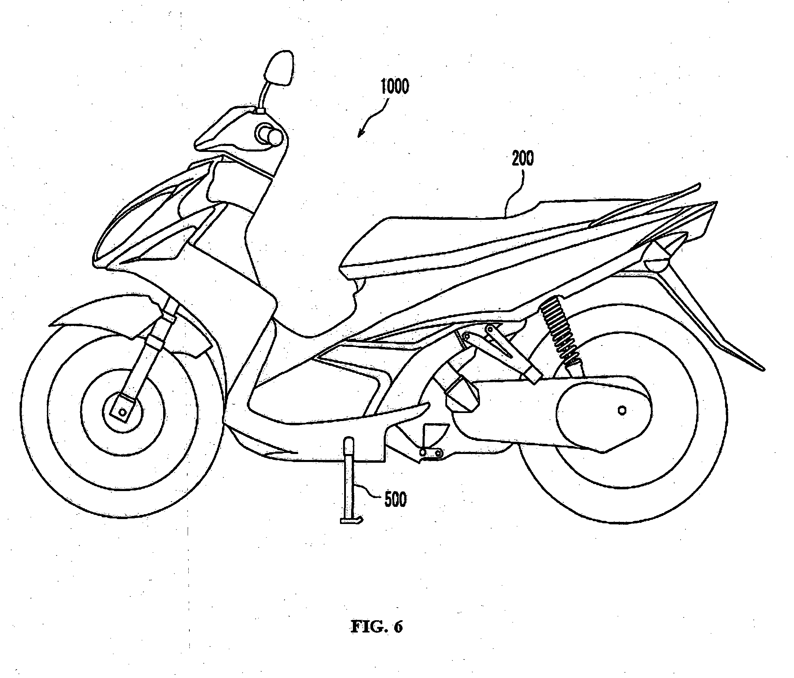

Also, in the embodiment, a straddle-type vehicle 1000 is put in an inclined state by a side stand 500 as shown in Fig. 6. In the embodiment, as shown in Fig. 2, the cover 100 is arranged around the tap 310, through which a liquid is poured, on the upper surface of the fuel tank 300 arranged on the straddle-type vehicle 1000. In the embodiment, as shown in Fig. 3, the drain hole 130 is formed on that side (left side) of the reservoir 120, which becomes the under or lower side when put in an inclined state by the side stand 500. Thereby, with the straddle-type vehicle 1000 put in an inclined state by the side stand 500, fuel overflowing into the reservoir 120 from the tap 310 can be smoothly discharged from the drain hole 130.

Further, in the embodiment, the cover 100 is arranged around the tap 310 (feed oil port), through which fuel is poured, on the upper surface of the fuel tank 300 arranged below the seat 200 of the straddle-type vehicle 1000 as shown in Fig. 1. In a state of being arranged around the tap 310, the reservoir 120 is formed forwardly of the tap 310 on the cover 100. The side walls 122, 123 are provided upright around the reservoir 120 and the pent roof is extended above the reservoir 120 from the side walls 121, 122, 123. Further, the side walls 122, 123 provided upright around the reservoir 120 are extended laterally of the tap 310 from a periphery of the reservoir 120.

The straddle-type vehicle 1000 is designed as shown in Fig. 6 so that a front side of the seat is relatively low so as to permit a driver to readily place their feet on the ground in a state of being seated on the seat 200. Further, the straddle-type vehicle 1000 is frequently designed such that the seat 200 is increased in height toward the rear thereof in order to maintain a driver in a forward tilting posture, or to provide a seat 200 for a tandem rider on the rear. Therefore, the upper surface of the fuel tank 300 arranged below the seat 200 is frequently low on the front thereof and high on the rear thereof as shown in Fig. 1. Therefore, with the cover 100 arranged around the tap 310, through which fuel is poured, on the upper surface of the fuel tank 300 arranged below the seat 200, a non-waste configuration, in which the front side of the seat 200 is conformed to a shape of the upper surface of the fuel tank 300 with a front side thereof being low, is provided by forming the reservoir 120 forwardly of the tap 310. In the embodiment, the side walls 122, 123 provided upright around the reservoir 120 are extended laterally of the tap 310 from the periphery of the reservoir 120. Thereby, even in the case where the straddle-type vehicle 1000 is put in an inclined state by the side stand 500, fuel overflowing from the tap 310 can be appropriately led to the reservoir 120. In addition, in the case where the straddle-type vehicle 1000 is put in an inclined state by the side stand 500, the side wall 122 or 123 is preferably extended laterally of the tap 310 from the periphery of the reservoir 120 at least on that side, which becomes the under or lower side when being put in an inclined state by the side stand 500.

With the cover 100, the side walls 121, 122, 123 are provided upright around the reservoir 120, in which a fuel overflowing from the feed oil port 310 of the fuel tank 300 stays, and the pent roof 124 is extended above the reservoir 120 from the side walls 121, 122, 123. Accordingly, even when fuel overflowing from the feed oil port 310 and flowing forward toward the reservoir 120 strikes against the front side wall 131 to become choppy or turbulent, there is minimal risk that the fuel will spill or splash over the side wall 121 since the pent roof 124 is present above the turbulent region. The reservoir 120 is formed to be deeper than the surrounding region, so that the reservoir 120 is improved in volume. Also, when the straddle-type vehicle 1000 parks with the use of the side stand 500, the straddle-type vehicle 1000 is inclined a little. In the embodiment, the pent roof 124 is extended above the reservoir 120 on the front side of the cover 100 from the front side wall 121 of the cover 100 and corners of the front side wall 121 and the left and right side walls 122, 123, so that even when the straddle-type vehicle 1000 is inclined a little, it is possible to prevent fuel from spilling from the reservoir 120.

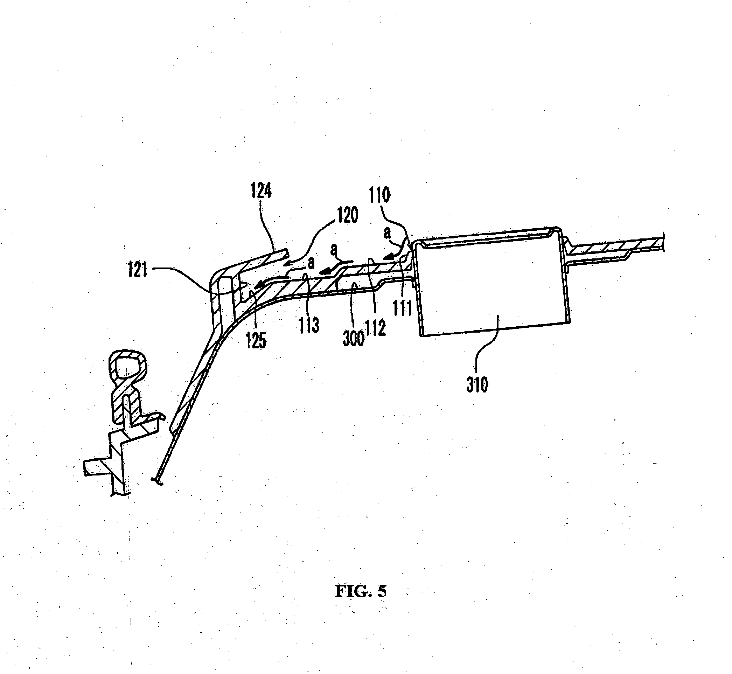

Also, in this embodiment, the bottom 125 of the reservoir 120 is inclined to become deeper towards the side wall 121 from the feed oil port 310 as shown in Fig. 5. Therefore, fuel spilling from the feed oil port 310 flows to the reservoir 120 along the slope of the bottom 125 as indicated by an arrow a in Fig. 5. When flowing to the reservoir 120, fuel flows downward once along the slope of the bottom 125, so that is difficult for the fuel to spill outside the cover 100 over the pent roof 124 disposed above the side wall 121. In this manner, in the embodiment, the bottom 125 of the reservoir 120 is inclined to become deeper towards the side wall 121 from the feed oil port 310, so that flow of fuel to the reservoir 120 can be controlled and it is difficult for the fuel to spill outside the cover 100 over the pent roof 124.

Also, in the embodiment, the drain hole 130 is formed in the deepest region of the reservoir 120 and the pent roof 124 is extended above the deepest region of the reservoir 120. In this manner, the pent roof 124 is present above the deepest region of the reservoir 120, in which a fuel overflowing from the feed oil port 310 is retained, so that it is difficult for fuel to spill outside the cover 100.

While an embodiment of the cover according to the present the invention has been described, the cover according to the invention is not limited to the embodiment. In particular, a specific shape of the cover, etc. can be modified variously as far as the scope of the invention is not changed.

While the pent roof 124 has been illustrated as being extended above the reservoir 120 on the front side of the cover 100 from the front side wall 121 of the cover 100 and corners off the front side wall 121 and the left and right side walls 122, 123, the invention is not limited to such configuration. For example, the reservoir is not necessarily disposed on the front side of the cover. Also, while depiction is omitted, the pent roof is preferably disposed in an appropriate position to assume an appropriate configuration and extended from the side walls so that the reservoir of the cover is increased in volume and a liquid overflowing from the tap of the tank does not spill from the cover. For example, while the reservoir is formed on the front side of the cover in the embodiment, the reservoir may be present on the side of the cover. In particular, in case of being mounted below a seat of a straddle-type vehicle, a reservoir may be provided on that side, which becomes the under or lower side when being put in an inclined state by a side stand, in the case where the straddle-type vehicle is put in an inclined state by the side stand.

Also, in the embodiment illustrated the cover mounted around the tap on the upper surface of the fuel tank is arranged below the seat of the straddle-type vehicle. The cover according to the invention is not limited to such a cover. The cover is applicable to taps, ports, spouts or the like of various tanks such as a radiator cooling water filler hole on a radiator cooling water tank, an oil filler hole on an engine oil tank. The invention is applicable to various covers arranged around a tap, through which a liquid is poured, on an upper surface of various tanks, and having a tray shape to receive a liquid overflowing from the tap.

As described above, with the cover according to the invention, the side walls are provided upright around the reservoir, in which liquid overflowing from the tap of the tank stays, and the pent roof is extended above the reservoir from the side walls, so that it is difficult for fuel overflowing from the feed oil port of the fuel tank to spill from the cover. Therefore, the cover is preferred as a cover for a fuel tank of a straddle-type vehicle. In addition, the straddle-type vehicle includes, in addition to various vehicles ridden in a straddle-type posture, scooter type motorcycles, snowmobiles, four-wheeled buggies, etc.

A straddle-type vehicle comprising a hose fixing structure according to a second embodiment of the invention will be described below with reference to the drawings. In addition, members and parts functioning in the same manner are denoted by the same reference numerals and similarly described in the drawings. Also, the invention is not limited to the following embodiments.

With motorcycles, for example, some vehicles are equipped with a cover on a feed oil port of the fuel tank that receives fuel spilled during fueling as described in the above first embodiment. This type of cover includes a tray section where spilled fuel stays. A drain hole is formed at the bottom of the tray and a drain hose is connected to this drain hole. As a result of adopting this structure, fuel spilled from the feed oil port stays in the tray section, passes through the drain hole and the drain hose, and then discharges out to the exterior. To inhibit this type of drain hose from being shaken during traveling, the drain hose is normally fixed to the frame of the vehicle using some kind of fixing fixture (for example, as described in JP-A-2002-362459 and JP-A-2004-66937). Additionally, in order to make arrangement of the drain hose easier, a structure has been described in which, when a fuel tank and an oil tank are positioned adjacent to each other, the drain hose is arranged between the two tanks (for example, as described in JP-A-6-219365).

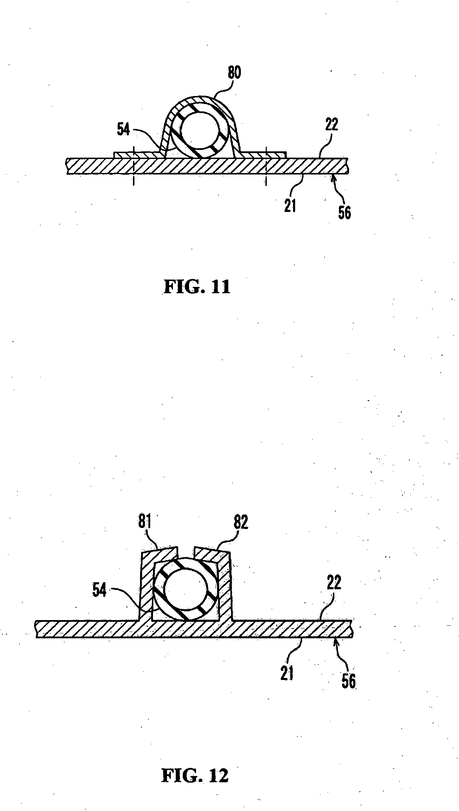

Since it is possible in some cases that any frame is not present in a position, in which it is desired to arrange a drain hose, however, it is conceivable to fix a drain hose to a back surface of an outer cover of a vehicle. However, the outer side of the outer cover creates the outward appearance of the vehicle and, as a cosmetic surface, it is painted and has a mirror finish. Fixing a drain hose on the back surface is undesirable since it would affect the outward appearance of the face or cosmetic surface of the outer cover or reduce the strength of the outer cover. For this reason, as shown in Fig. 11, from the standpoint of outward appearance, a method in which a drain hose is attached to a back surface 22 of an outer cover 56 by screwing in a fixing fixture 80 that fixes the drain hose 54, cannot be used when design is being emphasized because it exposes unnecessary screws on a cosmetic surface 21. Also, because the screw holes form perforations, the strength of the cosmetic surface may be reduced. In addition, for example, as shown in Fig. 12, it is possible to form guides 81, 82 on the back surface 22 of the vehicle outer cover 56. The drain hose 54 passes through the guides 81, 82 and is thereby fixed. However, depending on the shape of the guides 81, 82, component costs may increase due to slide moulding, etc. being necessary.

The inventor considered these circumstances and investigated a fixing structure for a hose that would not have an effect on the cosmetic surface 21 and which would be easy to form. Furthermore, the inventor investigated a structure that allows easier installation and removal of a hose such as a drain hose during assembly and maintenance of the vehicle, and the result was development of a novel hose fixing structure.

Hereinafter, a hose fixing structure of second embodiment of the invention will be explained.

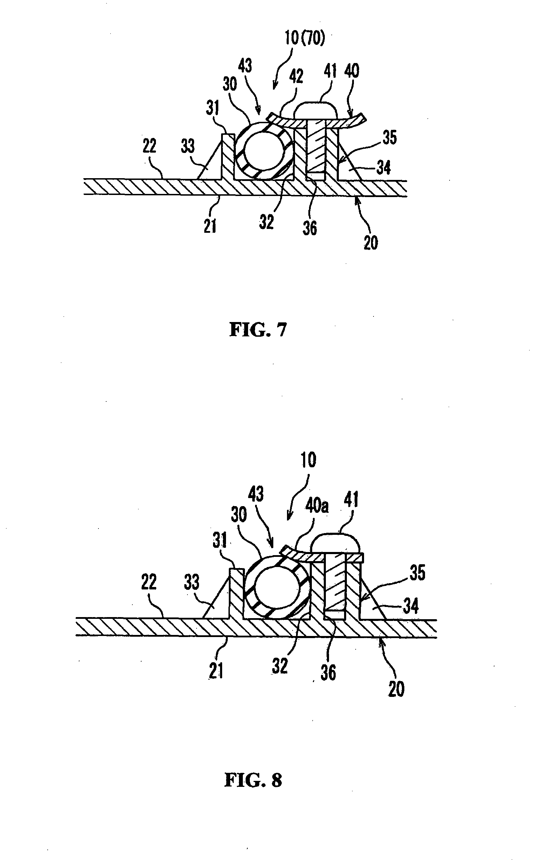

In this embodiment, a hose fixing structure 10, as shown in Fig. 7, fixes a hose 30 to the back surface 22 of a plastic molded part 20 that has one side with a cosmetic surface 21. The hose 30 is arranged along the back surface 22. The back surface 22 is provided with support sections 31, 32 that support both sides of the hose 30. These support sections 31, 32 extend in a die cutting direction of a plastic molded part 20. A stopper member 40 is attached to at least one of the support sections 31, 32, and holds the hose 30 in between both the support sections 31, 32.

The hose fixing structure 10 includes support sections 31, 32 that extend in the die cutting direction of the plastic molded part 20 and separately includes the stopper member 40, so the structure can be formed in a simple split die. This means that the plastic molded part 20, which is not shown in the figures, can be formed with a pair of metal moulds including a first metal mould for forming the cosmetic surface 21 and a second metal mould for forming the back surface 22. In addition, the support sections 31, 32 can be removed from the mould in generally the normal line direction of the back surface 22. Moreover, the stopper member 40 that holds the hose 30 between the supports sections 31, 32 at either side is attached to at least one of the supports sections 31, 32. The stopper member 40 is attached to the support section 32, and this attachment structure has no effect on the outward appearance on the cosmetic surface 21.

Note that, the above hose fixing structure 10 can be used as a fixing structure for various types of hoses. For example, in addition to the above-described fuel drain hose it can be used as a fixing structure for an air conditioner drain hose, or hoses that bound together cables.

In detail, in this embodiment, ribs 33, 34 are formed as appropriate on the support sections 31, 32. Also, a boss section 35 is formed on the support section 32 at one side. A screw hole 36 is formed in the boss section 35. The stopper member 40 is a washer, and the stopper member 40 is fixed to the boss section 35 by a screw 41. An outer circumference section 42 of the washer 40 curves away from the back surface 22. This forms a gap 43 that allows the hose 30 to be inserted between the support sections 31, 32 at either side.

This embodiment includes the gap 43 that allows the hose 30 to be inserted in between the support sections 31, 32 at either side, and thus the installation and removal of the hose 30 can be performed when the stopper member 40 is attached to the support section 32. This makes it easier to perform the work done when removing and installing the hose 30, or maintaining the hose 30. It is desirable that the gap 43 that allows the hose 30 to be inserted between the support sections 31, 32 at either side is desirable for the hose 30 to be installed and removed during maintenance, etc. when the stopper member 40 is attached, while at the same time allowing the function of the stopper member 40, ie, holding the hose 30 between the support sections 31, 32 at either side during normal vehicle travel, to be maintained.

Additionally, in this embodiment, the boss section 35 is formed on the support section 32 at one side, and the washer 40 (the stopper member) is screw fixed to the boss section 35. Accordingly, even if a screw is used for fixing, the screw hole 36 can be formed in the boss section 35 and there is no effect on the outward appearance of the cosmetic surface 21.

In the above-described embodiment, a configuration with a washer being used for the stopper member 40 is given as an example. Washers are common parts that can be obtained at a low cost and this is one member that is suitable for use as the stopper member 40 of the invention. In particular, in this embodiment the outer circumference 42 of the washer 40 (the stopper member) curves away from the back surface 22 such that the gap 43 which allows the hose 30 to be inserted between the support sections 31, 32 at either side is formed. The shape of a washer is the same in the circumferential direction, and so there is no effect on the gap 43 even if the washer is turned when it is screw fixed. This is another feature that makes a washer suitable for use as the stopper member 40 of the invention.

Note that, the stopper member 40 is not limited to being a washer. A member with a shape that is suitable for holding the hose 30 can be used. For example, as shown in Fig. 8, a tab 40a can be used for the stopper member instead of a washer. Note that, although not shown in the figures, when the tab 40a is used, a rotation stopping structure for stopping rotation of the tab 40a may be used. For example, a portion of the tab 40a may include a rotation stopper that engages with a portion of the supporting section 32. Additionally, the rotation stopper member that stops rotation of the tab 40a may be aligned and screw fixed.

Additionally, an example in which the stopper member is screwed in is given, but the attachment structure for the stopper member is not limited to just a screw-in type. For example, the stopper member 40 may be adhered on, or an appropriate fitting structure or engagement structure may be formed in between the boss section 35 and stopper member 40, and the stopper member 40 may be attached using this fitting structure or engagement structure.

Furthermore, in the hose fixing structure 10, with respect to fixing the hose 30, the stopper member 40 may be attached to both of the support sections 31, 32 at either side or the stopper member 40 may attached so that it extends between the support sections 31, 32 at either side. However, in order to provide a structure in which installation and removal of the hose 30 is easy, in other words, with respect to making it possible to install and remove the hose 30 when the stopper member 40 is attached, it is favorable that the stopper member 40 is attached to the support section 32 at one side so as to form the gap 43 that allows the hose 30 to be inserted between the supporting sections 31, 32 at either side.

Hereinafter, an embodiment in which the hose fixing structure is applied to a vehicle outer cover will be described.

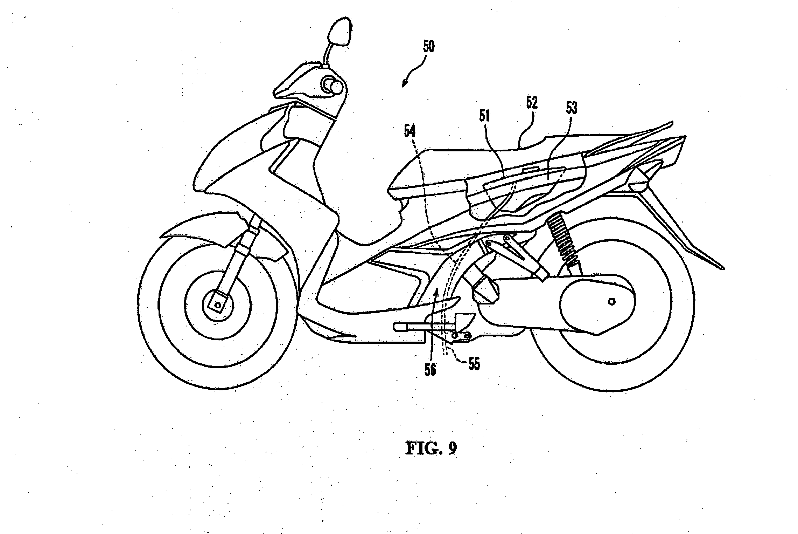

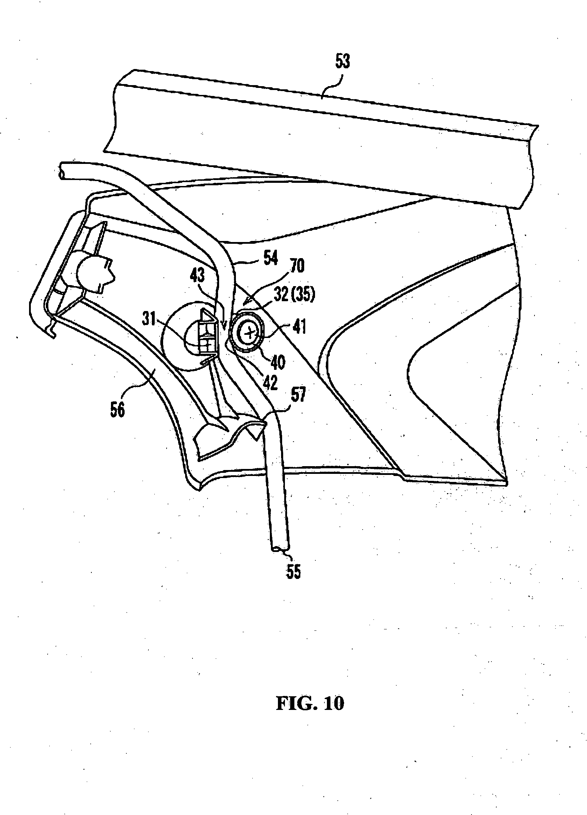

In this embodiment, a vehicle 50 as shown in Fig. 9 is a scooter motorcycle. Furthermore, a fuel tank 51 is attached to a frame 53 supporting a seat 52. The drain hose 54 is arranged so that it faces down in relation to the vehicle 50 from the area around a feed oil port of the fuel tank 51. A portion of the drain hose 54 is fixed to the frame 53 and another portion of the drain hose 54 is fixed to the back surface 22 of the outer cover 56 arranged on the lower side surface of the seat 52 so that the drain hose 54 is arranged in a predetermined position. Fig. 10 shows the back surface 22 of the outer cover 56. The drain hose 54, as shown in Fig. 10, is arranged along the back surface 22 of the outer cover 56. A hose fixing structure 70 includes the predetermined position at which the drain hose 54 is fixed on the back surface 22 of the outer cover 56.

The back surface of the outer cover 56 includes the support sections 31, 32 that support both sides of the drain hose 54 at the predetermined position at which the drain hose 54 is fixed. The support sections 31, 32 extend in the die cutting or separation direction of the outer cover 56. In this embodiment, the hose fixing structure 70 has the same structure as the hose fixing structure 10 shown in Fig. 7, and the boss section 35 is formed on the supporting section 32 on the side that is opposite to the side along which the hose 30 passes. The screw hole 36 is formed in the boss section 35 in a process that follows forming of the outer cover 56. Note that, at this time, it is favorable that the boss section 35 does not perforate the cosmetic surface 21 of the outer cover 56, and that the formed boss section 35 is adequate for forming the screw hole 36 deep enough to allow the screw 41 to be screwed in. Additionally, if the mould for forming the boss section 35 includes a structure that can form the hole forming the screw hole at the same time as the boss section 35, uniformity of product quality can be achieved because the screw hole position will be consistent among components, and formation of the screw hole can be made easier. Additionally, the boss section 35 will not compromise the strength of the cosmetic surface 21 of the outer cover 56. The stopper member 40 is a washer that is screwed into the boss section 35.

In this embodiment, the outer circumference 42 of the washer 40 curves away from the back surface 22 of the outer cover 56, and the gap 43 is formed that allows the hose 30 to be inserted between the supporting sections 31, 32 at either side.

In this embodiment, as shown in Fig. 10, the hose 30 is the drain hose 54, and the outer cover 56 includes a guide 57 for guiding the hose 30 such that a discharge hole 55 (see Fig. 9) of the drain hose 54 is arranged to face away from the vehicle toward a road surface. As a result, with the hose fixing structure 70, it is possible to arrange the discharge hole 55 of the drain hose 54 to face away from the vehicle 50 toward the road surface as well as fix the drain hose 54 in the predetermined position on the outer cover 56.

The hose fixing structure according to the embodiment of the invention has been explained above, but the hose fixing structure of the embodiment of the invention is not limited to the above-described embodiment.

For example, in the hose fixing structure of the invention, unless explicitly stated, the hose is not limited to a drain hose and the plastic molded part that uses the hose fixing structure is not limited to the outer cover of a vehicle.

Additionally, the hose fixing structure of the invention can be widely utilized as a method for fixing a hose when arranging a hose along a back surface when the back surface is of a plastic molded part that has one side with a cosmetic surface. The invention, for example, maybe used as a structure for fixing a hose to the back surface of an outer cover on a vehicle such as a scooter motorcycle in which the locations that can be selected for fixing a hose such as a drain hose are few in comparison to an automobile.

### Description of Reference Numerals and Signs

- 100:: cover
- 110:: opening
- 111:: edge
- 120:: reservoir
- 121, 122, 123:: side wall
- 124:: pent roof
- 125:: bottom
- 130:: drain hole
- 200:: seat
- 300:: fuel tank (tank)
- 310:: feed oil port (tap)
- 500:: side stand
- 1000:: straddle-type vehicle

## Claims

1. A cover (100) adapted to be arranged around a port (310) on a surface of a tank (300) arranged to receive a liquid through said port (310), wherein the cover (100) comprises:
a tray adapted to receive liquid overflowing from the port (310);
a reservoir (120) adapted to retain liquid overflowing from the port (310);
a side wall (121, 122, 123) provided upright around the reservoir (120); and
a drain hole (130) formed in a deepest region of the reservoir (120), **characterised by** a roof (124) extending above the reservoir (120) from the side wall (121, 122, 123); wherein the roof (124) extends above said deepest region; wherein
a bottom (125) of the reservoir (120) is inclined to become deeper towards the side wall (121, 122, 123) from the port (310).

2. The cover (100) according to claim 1, wherein a side end of the roof (124) is contiguous to the side wall (121, 122, 123) provided upright around the reservoir (120).

3. The cover (100) according to claim 1 or 2, wherein the side wall (121, 122, 123) extends around the port (310) from a periphery of the reservoir (120).

4. A straddle-type vehicle (1000) comprising the cover (100) according to any one of claims 1 to 3.

5. A straddle-type vehicle (1000) according to claim 4, further comprising a plastic molded part (20) and a hose fixing structure (10) adapted to fix a hose (30) connected to the drain hole (130) to a back surface (22) of the plastic molded part (20) that has one side with a cosmetic surface (21), the hose fixing structure (10) comprising:
support sections (31, 32) provided on the back surface (22) for supporting sides of the hose (30), wherein the support sections (31, 32) extend in a die cutting direction of the plastic molded part (20); and
a stopper member (40) attached to at least one of the support sections (31, 32)and adapted to hold the hose (30) between the support sections (31, 32).

6. The vehicle (1000) according to claim 5, wherein a gap (43) is formed that allows the hose (30) to be inserted between at least one support section (31, 32) and the stopper member (40).

7. The vehicle (1000) according to claim 5 or 6, wherein a boss section (35) is formed on at least one support section (31, 32), and the stopper member (40) is screwed to the boss section (35).

8. The vehicle (1000) according to claim 5, 6 or 7, wherein an outer region (42) of the stopper member (40) curves in a direction away from a back surface thereof, and a gap (43) is formed that allows the hose (30) to be inserted between at least one support section (31, 32) and the stopper member (40).

9. A vehicle (1000) according to claim 4, further comprising a vehicle outer cover (56) and a hose fixing structure (70) that fixes a hose (54) connected to the drain hole (130) to a back surface (22) of the vehicle outer cover (56) that is plastic moulded, wherein
the outer cover (56) includes support sections (31, 32) that support the hose (54) and extend in a die cutting direction of the outer cover (56), and a stopper member (40) that holds the hose (54) between the support sections (31, 32) is attached to at least one of the support sections (31, 32).

10. The vehicle (1000) according to claim 9, wherein the outer cover (56) includes a guide (57) for guiding the hose (54) so that a discharge hole (55) of the hose (54) faces away from an associated vehicle (50) and toward a road surface.

11. A straddle-type vehicle (1000) comprising:
a tank (300) having a port (310) through which liquid is poured; and
a cover (100) arranged around the port (310) and comprising:
a tray adapted to receive liquid overflowing from the port (310);
a reservoir (120) adapted to retain liquid overflowing from the port (310);
a side-wall (121, 122, 123) provided upright around the reservoir (120); and
wherein a drain hole (130) is formed on that side of the reservoir (120) which becomes the lower side when the vehicle (1000) is put in an inclined state by the side stand (500). a drain hole (130), wherein
a bottom (125) of the reservoir (120) is inclined to become deeper towards the side wall (121, 122, 123) from the port (310), **characterised by** a side stand (500) arranged to support the vehicle (1000) in an inclined state; and a roof (124) extending above the reservoir (120) from the side wall (121, 122, 123).

12. A straddle-type vehicle (1000) comprising:
a tank (300) having a port (310) through which a liquid is poured; and
a cover (100) according to claim 1.

13. The straddle-type vehicle (1000) according to claim 12, wherein the side wall (121, 122, 123) provided upright around the reservoir (120) is extended laterally of the port (310) from a periphery of the reservoir (120).

## Patentansprüche

1. Abdeckung (100), die so ausgebildet ist, dass sie um eine Öffnung (310) herum auf einer Fläche eines Tanks (300) angeordnet wird, der angeordnet ist, um eine Flüssigkeit durch die Öffnung (310) aufzunehmen, wobei die Abdeckung (100) aufweist:
eine Mulde, die ausgebildet ist, um Flüssigkeit aufzunehmen, die aus der Öffnung (310) überläuft;
einen Behälter (120), der ausgebildet ist, um die Flüssigkeit zurückzuhalten, die aus der Öffnung (310) überläuft;
eine Seitenwand (121, 122, 123), die aufrecht stehend um den Behälter (120) herum vorhanden ist; und
ein Ablassloch (130), das im tiefsten Bereich des Behälters (120) ausgebildet ist, gekennzeichnet durch eine Abdeckkappe (124), die sich über dem Behälter (120) von der Seitenwand (121, 122, 123) aus erstreckt, wobei sich die Abdeckkappe (124) über dem tiefsten Bereich erstreckt; wobei
ein Boden (125) des Behälters (120) geneigt ist, damit er in Richtung der Seitenwand (121, 122, 123) von der Öffnung (310) aus tiefer wird.

2. Abdeckung (100) nach Anspruch 1, bei der ein Seitenende der Abdeckkappe (124) der Seitenwand (121, 122, 123) benachbart ist, die aufrecht stehend um den Behälter (120) herum vorhanden ist.

3. Abdeckung (100) nach Anspruch 1 oder 2, bei der sich die Seitenwand (121, 122, 123) um die Öffnung (310) herum von einem Umfang des Behälters (120) aus erstreckt.

4. Grätschsitz-Fahrzeug (1000), das die Abdeckung (100) nach einem der Ansprüche 1 bis 3 aufweist.

5. Grätschsitz-Fahrzeug (1000) nach Anspruch 4, das außerdem ein Formteil (20) aus Kunststoff und eine Schlauchbefestigungsstruktur (10) aufweist, die ausgebildet ist, um einen Schlauch (30), der mit dem Ablassloch (130) verbunden ist, an einer hinteren Fläche (22) des Formteils (20) aus Kunststoff zu befestigen, das eine Seite mit einer Verschönerungsfläche (21) aufweist, wobei die Schlauchbefestigungsstruktur (10) aufweist:
Stützabschnitte (31, 32), die an der hinteren Fläche (22) für das Stützen der Seiten des Schlauches (30) vorhanden sind, wobei sich die Stützabschnitte (31, 32) in einer Ausstanzrichtung des Formteils (20) aus Kunststoff erstrecken; und
ein Anschlagelement (40), das an mindestens einem der Stützabschnitte (31, 32) befestigt und ausgebildet ist, um den Schlauch (30) zwischen den Stützabschnitten (31, 32) zu halten.

6. Fahrzeug (1000) nach Anspruch 5, bei dem ein Spalt (43) ausgebildet ist, der ein Einsetzen des Schlauches (30) zwischen mindestens einem Stützabschnitt (31, 32) und dem Anschlagelement (40) gestattet.

7. Fahrzeug (1000) nach Anspruch 5 oder 6, bei dem ein Nabenabschnitt (35) an mindestens einem Stützabschnitt (31, 32) ausgebildet ist, und wobei das Anschlagelement (40) am Nabenabschnitt (35) angeschraubt ist.

8. Fahrzeug (1000) nach Anspruch 5, 6 oder 7, bei dem sich ein äußerer Bereich (42) des Anschlagelementes (40) in einer Richtung von einer hinteren Fläche davon weg biegt und ein Spalt (43) gebildet wird, der das Einsetzen des Schlauches (30) zwischen mindestens einem Stützabschnitt (31, 32) und dem Anschlagelement (40) gestattet.

9. Fahrzeug (1000) nach Anspruch 4, das außerdem eine äußere Fahrzeugabdeckung (56) und eine Schlauchbefestigungsstruktur (70) aufweist, die einen Schlauch (54), der mit dem Ablassloch (130) verbunden ist, an einer hinteren Fläche (22) der äußeren Fahrzeugabdeckung (56) befestigt, die aus Kunststoff geformt ist, wobei
die äußere Abdeckung (56) Stützabschnitte (31, 32), die den Schlauch (54) stützen und sich in einer Ausstanzrichtung der äußeren Abdeckung (56) erstrecken, und ein Anschlagelement (40) umfasst, das den Schlauch (54) zwischen den Stützabschnitten (31, 32) hält und an mindestens einem der Stützabschnitte (31, 32) befestigt ist.

10. Fahrzeug (1000) nach Anspruch 9, bei dem die äußere Abdeckung (56) eine Führung (57) für das Führen des Schlauches (54) umfasst, so dass ein Abflussloch (55) des Schlauches (54) weg von einem dazugehörenden Fahrzeug (50) und in Richtung einer Straßenfläche liegt.

11. Grätschsitz-Fahrzeug (1000), das aufweist:
einen Tank (300) mit einer Öffnung (310), durch die Flüssigkeit gegossen wird; und
eine Abdeckung (100), die um die Öffnung (310) herum angeordnet ist und aufweist:
eine Mulde, die ausgebildet ist, um Flüssigkeit aufzunehmen, die aus der Öffnung (310) überläuft;
einen Behälter (120), der ausgebildet ist, um die Flüssigkeit zurückzuhalten, die aus der Öffnung (310) überläuft;
eine Seitenwand (121, 122, 123), die aufrecht stehend um den Behälter (120) herum vorhanden ist; und
ein Ablassloch (130), worin
ein Boden (125) des Behälters (120) geneigt ist, damit er in Richtung der Seitenwand (121, 122, 123) von der Öffnung (310) aus tiefer wird,
gekennzeichnet durch einen Seitenständer (500), der angeordnet ist, um das Fahrzeug (1000) in einem geneigten Zustand zu stützen, und eine Abdeckkappe (124), die sich über dem Behälter (120) von der Seitenwand (121, 122, 123) aus erstreckt,
wobei ein Ablassloch (130) auf jener Seite des Behälters (120) ausgebildet ist, die die untere Seite wird, wenn das Fahrzeug (1000) in einen geneigten Zustand mittels des Seitenständers (500) gebracht wird.

12. Grätschsitz-Fahrzeug (1000), das aufweist:
einen Tank (300) mit einer Öffnung (310), durch die eine Flüssigkeit gegossen wird; und
eine Abdeckung (100) nach Anspruch 1.

13. Grätschsitz-Fahrzeug (1000) nach Anspruch 12, bei dem die Seitenwand (121, 122, 123), die aufrecht stehend um den Behälter (120) herum vorhanden ist, seitlich von der Öffnung (310) von einem Umfang des Behälters (120) aus verlängert wird.

## Revendications

1. Couvercle (100), adapté pour être agencé autour d'un orifice (310) sur une surface d'un réservoir (300), destiné à recevoir un liquide à travers ledit orifice (310), le couvercle (100) comprenant :
un plateau, adapté pour recevoir le liquide débordant de l'orifice (310);
un réservoir (120), adapté pour retenir le liquide débordant de l'orifice (310) ;
une paroi latérale (121, 122, 123), agencée de manière verticale autour du réservoir (120) ; et
un trou de vidange (130), formé dans la région la plus profonde du réservoir (120), **caractérisé par** un toit (124), s'étendant au-dessus du réservoir (120) à partir de la paroi latérale (121, 122, 123) ; dans lequel le toit (124) s'étend au-dessus de ladite région la plus profonde, dans lequel
un fond (125) du réservoir (120) est incliné de sorte à avoir une profondeur accrue vers la paroi latérale (121, 122, 123) à partir de l'orifice (310).

2. Couvercle (100) selon la revendication 1, dans lequel une extrémité latérale du toit (124) est contiguë à la paroi latérale (121, 122, 123) agencée de manière verticale autour du réservoir (120).

3. Couvercle (100) selon les revendications 1 ou 2, dans lequel la paroi latérale (121, 122, 123) s'étend autour de l'orifice (310) à partir d'une périphérie du réservoir (120).

4. Véhicule du type à enfourcher (1000), comprenant le couvercle (100) selon l'une quelconque des revendications 1 à 3.

5. Véhicule du type à enfourcher (1000) selon la revendication 4, comprenant en outre une partie moulée en plastique (20) et une structure de fixation d'un tuyau (10), adaptée pour fixer un tuyau (30) connecté au trou de vidange (130) sur une surface arrière (22) de la partie moulée en plastique (20), comportant un côté avec une surface cosmétique (21), la structure de fixation du tuyau (10) comprenant :
des sections de support (31, 32), agencées sur la surface arrière (22) pour supporter les côtés du tuyau (30), les sections de support (31, 32) s'étendant dans une direction de découpage à l'emporte-pièce de la partie moulée en plastique (20) ; et
un élément d'arrêt (40), fixé sur au moins une des sections de support (31, 32), et adapté pour retenir le tuyau (30) entre les sections de support (31, 32).

6. Véhicule (1000) selon la revendication 5, dans lequel un espace (43) est formé, permettant l'insertion du tuyau (30) entre au moins une section de support (31, 32) et l'élément d'arrêt (40).

7. Véhicule (1000) selon les revendications 5 ou 6, dans lequel une section de bossage (35) est formée sur au moins une section de support (31, 32), l'élément d'arrêt (40) étant vissé sur la section de bossage (35).

8. Véhicule (1000) selon les revendications 5, 6 ou 7, dans lequel une région externe (42) de l'élément d'arrêt (40) est courbée dans une direction allant à l'écart d'une surface arrière de celle-ci, un espace (43) étant formé, permettant l'insertion du tuyau (30) entre au moins une section de support (31, 32) et l'élément d'arrêt (40).

9. Véhicule (1000) selon la revendication 4, comprenant en outre une enveloppe externe du véhicule (56) et une structure de fixation d'un tuyau (70), assurant la fixation d'un tuyau (54) connecté au trou de vidange (130) sur une surface arrière (22) de l'enveloppe externe du véhicule (56) qui est moulée en plastique ; dans lequel :
l'enveloppe externe (56) englobe des sections de support (31, 32), supportant le tuyau (54) et s'étendant dans une direction de découpage à l'emporte-pièce de l'enveloppe externe (56), un élément d'arrêt (40) retenant le tuyau (54) entre les sections de support (31, 32) étant fixé sur au moins une des sections de support (31, 32).

10. Véhicule (1000) selon la revendication 9, dans lequel l'enveloppe externe (56) englobe un guide (57) pour guider le tuyau (54) de sorte qu'un trou d'évacuation (55) du tuyau (54) est orienté à l'écart d'un véhicule associé (50) et vers une surface de la route.

11. Véhicule du type à enfourcher (1000), comprenant :
un réservoir (300), comportant un orifice (310) à travers lequel le liquide est versé ; et
un couvercle (100), agencé autour de l'orifice (310) et comprenant :
un plateau, adapté pour recevoir un liquide débordant de l'orifice (120) ;
un réservoir (120), adapté pour retenir le liquide débordant de l'orifice (310) ;
une paroi latérale (121, 122, 123), agencée de manière verticale autour du réservoir (120) ; et
un trou de vidange (130), dans lequel :
un fond (125) du réservoir (120) est incliné en vue d'avoir une profondeur accrue vers la paroi latérale (121, 122, 123) à partir de l'orifice (310),
**caractérisé par** une béquille (500), destinée à supporter le véhicule (1000) dans un état incline ; et un toit (124), s'étendant au-dessus du réservoir (120) à partir de la paroi latérale (121, 122, 123),
dans lequel un trou de vidange (130) est formé sur le côté du réservoir (120) constituant le côté inférieur lorsque le véhicule (1000) est placé dans un état incliné par la béquille (500).

12. Véhicule du type à enfourcher (1000), comprenant :
un réservoir (300), comportant un orifice (310) à travers lequel un liquide est versé ; et
un couvercle (100) selon la revendication 1.

13. Véhicule du type à enfourcher (1000) selon la revendication 12, dans lequel la paroi latérale (121, 122, 123), agencée de manière verticale autour du réservoir (120), est étendue latéralement par rapport à l'orifice (310) à partir d'une périphérie du réservoir (120).
